# EUROPEAN PATENT APPLICATION

(11) **EP 2 309 375 A1**
(43) Date of publication of application: **13.04.2011**
(21) Application number: 10002009.8
(22) Date of filing: 21.04.2010
(51) Int. Cl.: G06F 3/14, G09G 5/00, H04N 5/445

(54) **Method of displaying data**

(30) Priority: 24.09.2009 KR 20090090508; 25.09.2009 KR 20090091049
(71) Applicant: LG ELECTRONICS INC., Yeongdeungpo-gu Seoul 150-721 (KR)
(72) Inventor: Lee, Jong Ha, Pyeongtaek-si Gyeonggi-do 451-731 (KR); Shin, Jeong Soo, Pyeongtaek-si Gyeonggi-do 451-731 (KR)
(74) Representative: Gunzelmann, Rainer

(57) **Abstract**

A method and device for displaying data are discussed. According to an embodiment, the display device includes a first display unit; a first display controller configured to control the first display unit, to receive at least one content to be displayed, to check if any data included in the content is to be displayed separately, and to transmit the data to a second display controller if the checking indicates that the data is to be displayed separately; at least one second display unit; and the second display controller configured to control the second display unit to display the data received from the first display controller, wherein the first display unit is configured to display the content excluding the data under control of the first display controller, andwherein the first display unit and the second display unit are physically separated display units.

## Description

This application claims the priority benefits of Korean Patent Application No. 10-2009-0090508 filed on September 24, 2009, and Korean Patent Application No. 10-2009-0091049 filed on September 25, 2009, all of which are hereby incorporated by reference as if fully set forth herein.

### BACKGROUND OF THE INVENTION

### Field of the Invention

The present invention relates to a method for displaying data in a display device and a display device employing the method, wherein a first display controller transmits data to a second display controller and the second display controller controls the data to be output on a screen of a second display unit, thereby increasing user comfort and convenience.

### Discussion of the Related Art

Conventional broadcast services are provided in such a manner where content created at a broadcaster is transmitted through radio transmission media such as terrestrial, cable, or satellite broadcasting, and the user views the content using a receiver capable of receiving such radio transmission media.

While digital broadcasting technologies have been developed and commercialized for conventional analog broadcasting, various types of content services such as real-time broadcasts, Contents on Demand (CoD), game, and news can be provided to the user not only using a conventional radio wave or a wired/cable medium but also using a residential Internet connection.

While such content services are provided to the user, digital broadcast receivers increasingly provide additional information other than images to be displayed. However, such additional information is displayed as overlaid on the images being displayed, which causes discomfort and inconvenience to the user when the user views the images.

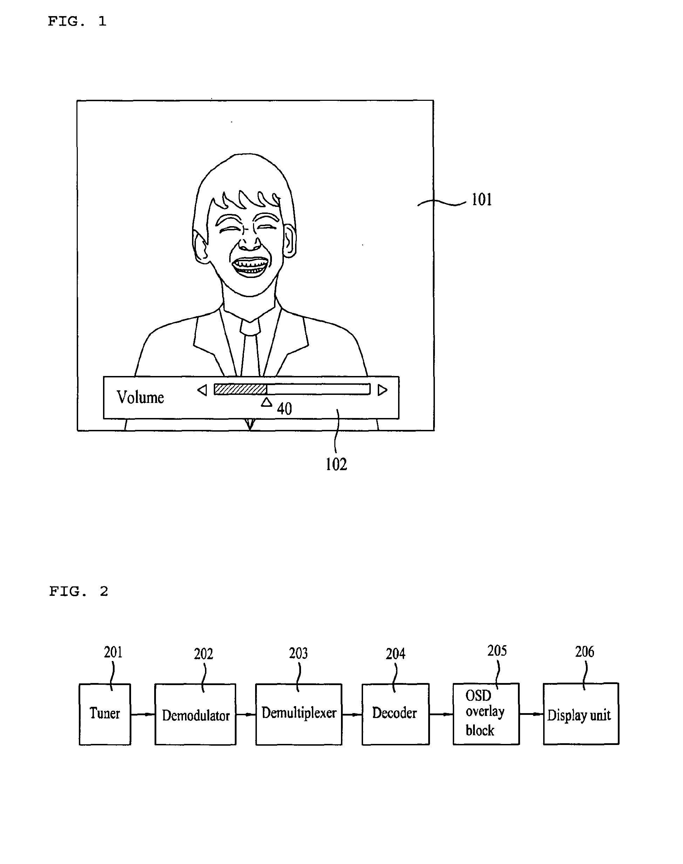

FIG. 1 illustrates an example in which a broadcast receiver outputs a screen of a display device 101 according to a related art. As shown in FIG. 1, the broadcast receiver outputs an OSD (On Screen Display) 102 so that the OSD overlaps an image signal (e.g., an image of a person) displayed on the screen. As a result, the OSD 120 hides or obstructs the displayed image at least in part, thereby causing discomfort and inconvenience to the user/viewer, which can also frustrate the user.

FIG. 2 illustrates a procedure in which a broadcast receiver generates and outputs a screen according to a related art.

As shown in FIG. 2, in the broadcast receiver, a demodulator 202 demodulates a broadcast signal received by a tuner 201. A demultiplexer 203 demultiplexes audio data and video data from the broadcast signal demodulated by the demodulator 202.

The demultiplexed audio and video data is transmitted to a decoder 204 and the decoder 204 then decodes the data. An overlay block 205 overlays the OSD on the decoded video data and outputs the resulting data to a display unit 206 such as the display device 101 of FIG. 1.

The screen output in this manner is displayed above the video data as described above. This interferes with viewing of the video data. Thus, there is a need to develop a method for displaying data and a display device employing the method which enable the user to view video data without the interference caused by the OSD.

### SUMMARY OF THE INVENTION

Accordingly, the present invention is directed to a method for displaying data and a display device employing the method that substantially obviate one or more problems due to limitations and disadvantages of the related art.

An object of the present invention is to provide a method for displaying data and a display device employing the method, wherein data other than an image signal is output to one or more second display units so that the user can conveniently and fully view the image signal on a first display unit while viewing the data on the second display unit(s).

Another object of the present invention is to provide a method for displaying data and a display device employing the method, wherein data included in a broadcast signal is extracted and output to one or more second display units so that the user can conveniently view an image signal on a first display unit while viewing the data on the second display unit(s).

Another object of the present invention is to provide a method for displaying data and a display device employing the method, wherein data received from a content server through a network such as the Internet is output to one or more second display units so that the user can conveniently view an image signal on a first display unit while viewing the data on the second display unit(s).

Another object of the present invention is to provide a method for displaying data and a display device employing the method, wherein data is extracted and output to one or more second display units according to a selection input from the user, thereby overcoming the problem of the user unable to view an image signal due to a screen overlaid on the image signal.

Another object of the present invention is to provide an advantageous display device such as digital TV that has a first display physically separated from one or more second display units for selectively displaying different contents.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for displaying data in a display device that receives and outputs a broadcast signal according to an embodiment includes outputting the received broadcast signal on a screen of a first display unit, transmitting data from a first display controller to a second display controller, controlling, by the second display controller, the data to be output on a second display unit, and outputting the data on a screen of the second display unit, wherein the display device includes at least two displays.

In another aspect of the present invention, a display device for receiving and outputting a broadcast signal according to an embodiment includes a first display unit for outputting the received broadcast signal on a screen of the first display unit, a first display controller for transmitting data to a second display controller, the second display controller for controlling the data to be output on a second display unit, and the second display unit for outputting the data on a screen of the second display unit, wherein the display device includes at least two displays.

In another aspect, the present invention provides a method for displaying data using a display device, the display device including a first display unit, a first display controller configured to control the first display unit, at least one second display unit, and a second display controller configured to control the at least one second display unit, the method comprising: receiving, by the first display controller, at lest one content to be displayed; checking, by the first display controller, if any data included in the at least one content is to be displayed separately; transmitting, by the first display controller, the data to the second display controller if the checking step indicates that the data is to be displayed separately; displaying, on the second display unit, the data under control of the second display controller; and displaying, on the first display unit, the at least one content excluding the data under control of the first display controller.

In another aspect, the present invention provides a display device for displaying data, the display device comprising: a first display unit; a first display controller configured to control the first display unit, to receive at least one content to be displayed, to check if any data included in the at least one content is to be displayed separately, and to transmit the data to a second display controller if the checking indicates that the data is to be displayed separately; at least one second display unit; and the second display controller configured to control the at least one second display unit to display the data received from the first display controller, wherein the first display unit is configured to display the at least one content excluding the data under control of the first display controller, and wherein the first display unit and the at least one second display unit are physically separated display units.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates an embodiment in which a broadcast receiver outputs a screen according to a related art;

FIG. 2 illustrates a procedure in which a broadcast receiver generates and outputs a screen according to a related art;

FIG. 3 illustrates an example of a display device according to an embodiment of the present invention;

FIG. 4 illustrates a cross-section of the display device of FIG. 3 according to an embodiment of the present invention;

FIG. 5 is a block diagram illustrating components of the display device of FIG. 3 according to an embodiment of the present invention;

FIG. 6 is a flow chart illustrating a method for displaying data on a display device according to an embodiment of the present invention;

FIG. 7 illustrates a method in which the second display unit outputs data received within a broadcast signal according to an embodiment of the present invention;

FIG. 8 illustrates a method in which content transmitted from a content server is output to the second display unit according to an embodiment of the present invention;

FIG. 9 illustrates a method for outputting stored data to the second display unit according to an embodiment of the present invention;

FIG. 10 illustrates examples of images that can be displayed on the first and second display units of a display device according to an embodiment of the present invention;

FIGS. 11A and 11B illustrate two examples of a display device according to an embodiment of the present invention; and

FIG. 12 illustrates an example of images that can be displayed on multiple second display units of a display unit according to an embodiment of the present invention.

### DETAILED DESCRIPTION OF THE PREFERRED EMBODIMENTS

A method for displaying data and a display device employing the method according to embodiments of the present invention will now be described in detail with reference to the accompanying drawings.

In the present invention and herein below, terms 'data', 'contents', 'images', and 'signals' are all interchangeable. A mention of any one of these terms is to be interpreted to include one or more of the other terms.

Although most terms of elements in the present invention have been selected from general ones widely used in the art taking into consideration their functions in the invention, the terms may be changed depending on the intention or convention of those skilled in the art or the introduction of new technology. Some terms have been arbitrarily selected by the applicant and their meanings are explained in detail in the following description as needed. Thus, the definitions of the terms used in the invention should be determined based on the whole content of this specification together with the intended meanings of the terms rather than their simple names or meanings.

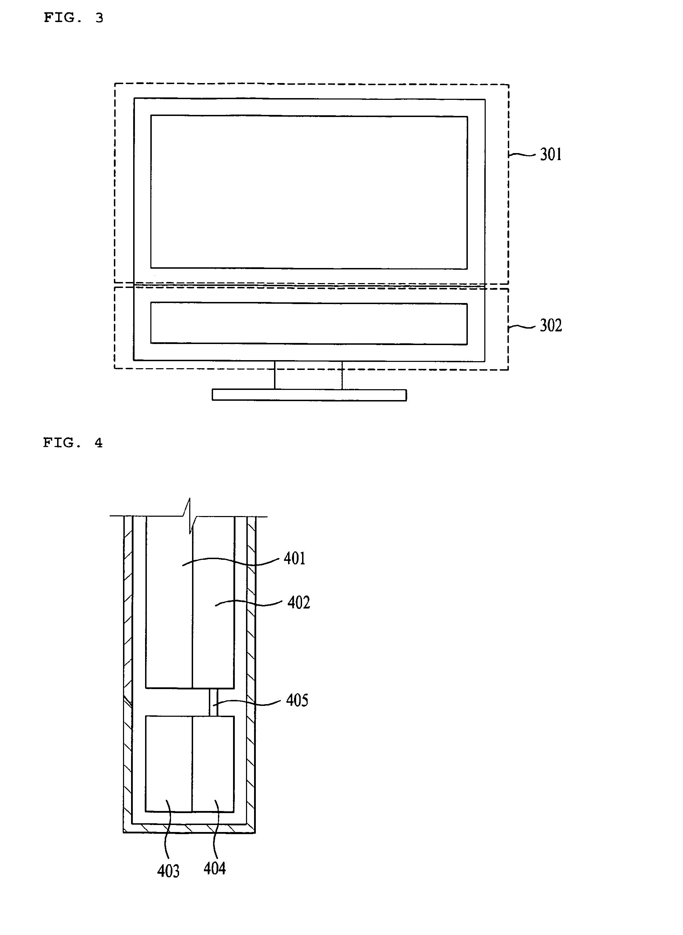

FIG. 3 illustrates a front view of a display device 300 according to an embodiment of the present invention. The display device 300 according to this embodiment includes a first display unit 301 and a second display unit 302. The first and second display unit 301 and 302 are physically separated from each other. For instance, a screen 310 of the first display unit 301 and a screen 320 of the second display unit 302 are physically and fixedly (or permanently) separated from each other by a frame 315 of the display device 300.

According to the embodiment, the second display unit 302 is provided at one side of the display device 300. For example, the second display unit 302 may be attached to one lower side of the first display unit 301. The first display unit 301 may be controlled by a first display controller of the display device 300 and the second display unit 302 may be controlled by a second display controller of the display device 300. Here, the first and second display controllers may be connected to a network through a connection unit in the display device 300 or connected to the display device 300. All components of the display device 300 and other display devices discussed herein according to various embodiments of the invention are each operatively coupled and configured.

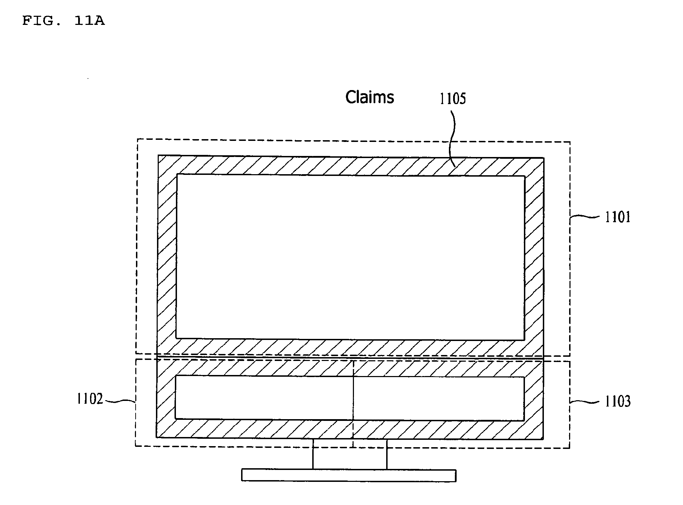

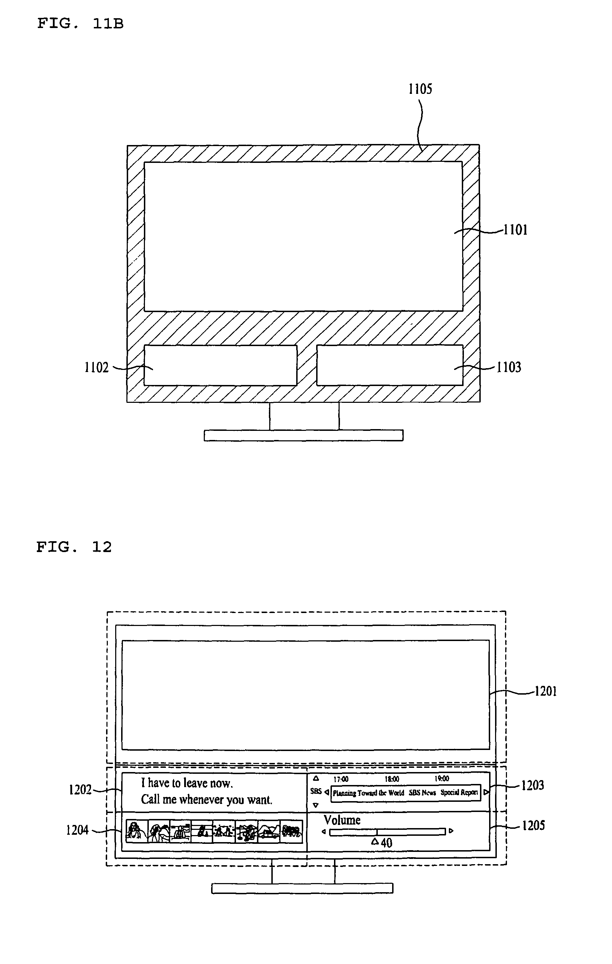

Although only one second display unit is illustrated in FIG. 3, a plurality of second display units may also be provided in the display device as shown, e.g., FIGS. 11A and 11B which will discussed later.

The display device of the present invention not only includes a broadcast receiver that receives and outputs content created by a broadcaster through terrestrial, cable, or satellite broadcasting but can also include an Internet Protocol Television (IPTV) that provides content over the Internet. The display device further includes other components that are known, e.g., an input unit such as a remote controller, a keyboard, a keypad, etc., an audio output unit such as a speaker, etc. The display device can be any display device such as, e.g., a digital TV, a computer laptop, a desktop, a monitor, a work station, a multimedia player, etc.

FIG. 4 illustrates a cross-section of a display device according to an embodiment of the present invention. As shown in FIG. 4, the display device according to the embodiment of the present invention includes a first display unit 401, a first display controller 402 that controls the first display unit 401, a second display unit 403, and a second display controller 404 that controls the second display unit 403. The display device of FIG. 4 can be the display device 300, such that the first display unit 401 can be equated to the first display unit 301, and the second display unit 403 can be equated to the second display unit 302.

According to the embodiment, the second display unit 403 and the second display controller 404 are attached to one side of the display device. For example, the second display unit 403 and the second display controller 404 may be attached to one lower side of the first display unit 401 and the first display controller 402. Here, the first display controller 402 and the second display controller 404 may be connected to the network (e.g., Internet, intranet, extranet, etc.) or a server in the network through a connection unit 405. The server can be a server of a content provider or service provider.

The connection unit 405 transfers a variety of data, control signals, and/or a variety of images from the first display controller 402 to the second display controller 404 and/or transfers power to the second display unit 403 and/or the second display controller 404. Further, data and other signals can be communicated from the second display controller 404 to the first display controller 402. That is, the first and second display controller 402 and 404 can communicate with each other and exchange data and signals. The connection unit 405 allows communication between the first and second display controllers 402 and 404 as well as communication between each of the first and display controllers 402 and 402 and an external device such as a server in a network or another display device or electronics device.

For example, the connection unit 405 may include a wired/wireless data port and may be a module for short range communication such as a Universal Serial Bus (USB), Bluetooth, Radio Frequency Identification (RFID), Infrared Data Association (IrDA), Ultra Wideband (UWB), or ZigBee according to an embodiment.

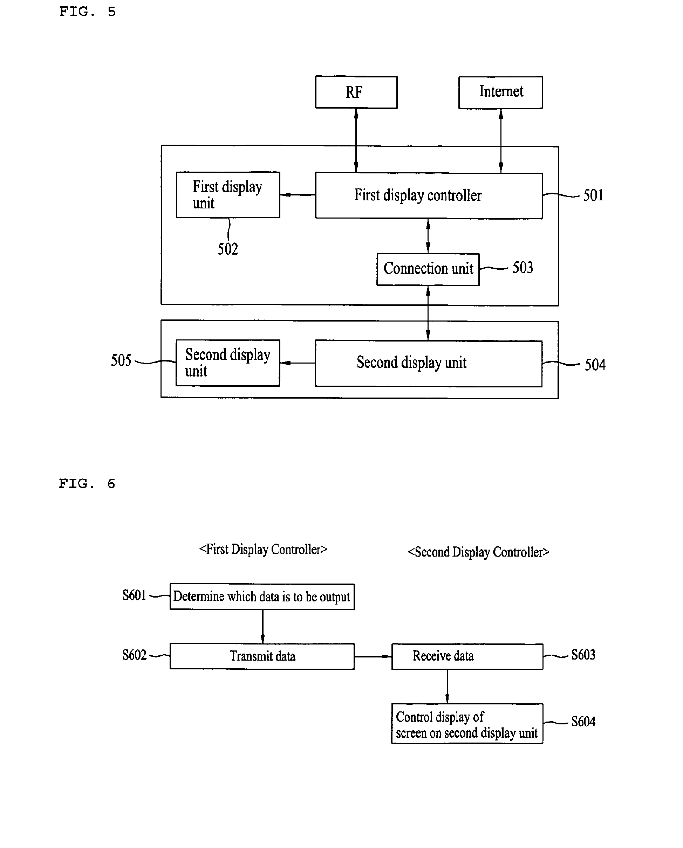

FIG. 5 is a block diagram illustrating a display device according to an embodiment of the present invention. The display device of FIG. 5 can be the display device of FIG. 4 and/or the display 300 of FIG. 3. For instance, the display device 300 can have the configurations shown in FIGS. 4 and 5 such that the first display unit 502 is the same as the first display unit 301 (401), and the second display unit 505 is the same as the second display unit 302 (403) of the display device 300.

As shown in FIG. 5, the display device according to the embodiment of the present invention includes a first display controller 501, a first display unit 502, a connection unit 503, a second display controller 504, and a second display unit 505. The first display unit 502 can be equated to the first display unit 301 and the second display unit 505 can be equated to the second display unit 302 as shown in FIGS. 3-5.

The first display controller 501 controls the first display unit 502 so as to display an image signal received from the outside (external device) or stored in an internal storage unit of the display device. The image signal can be provided from a removable storage medium such as an optical disc, a USB, a smart card, etc.

Further, the image signal not only can include a broadcast signal received through terrestrial, cable, or satellite broadcasting but can also include contents received over the Internet or other network. The broadcast signal not only includes a TV broadcast signal, a radio broadcast signal, and a data broadcast signal but also can include a broadcast signal in which a TV or radio broadcast signal is combined with a data broadcast signal.

On the other hand, the first display controller 501 receives an image signal or data associated with the image signal. Data mentioned in the present invention includes any data that can be output separately from the image signal. The data may be received together with an image signal within a broadcast signal, may be stored in a storage unit included in or connected to the display device, or may be transmitted from a content server through a network (for example, the Internet).

The data may also be transmitted from a storage unit or an electronic device, such as a Personal Video Recorder (PVR), a camera, a Universal Serial Bus (USB) device, a SIM card or other smart card, an optical disk, or a Portable Multimedia Player (PMP), which is connected to the display device through a variety of wired/wireless short range communication. Here the storage unit can be an internal storage unit of the display device or an external storage unit which can be connected to the display device.

For example, the data may include subtitle data, caption data, Electronic Program Guide (EPG) data, or other broadcast-related information which is transmitted within a broadcast signal, or thumbnail images extracted from video data included in a broadcast signal.

The data may be extracted from a broadcast signal and then be stored in a storage unit, which can be an internal storage of the display device or an external or portable storage unit connectable to the display device. The data may also be image data read from a storage unit according to a user input, for example, for selection of a variety of functions.

The data which can be displayed in the second display unit may also include a variety of content data (for example, weather information, sports score information, stock information) or data of a menu item (for example, a widget menu) transmitted from a content server according to selection of the menu item made by the user. Other examples and variations of the data are all part of the invention.

In one embodiment, the first display controller 501 determines which data is to be output to the second display controller 504 (for displaying on the second display unit 505) according to a selection input from the user. For example, when the user has selected an EPG output command, the first display controller 501 determines that EPG data is the data to be output to the second display controller 504. In that example, the EPG data can be separated from an input image signal of the display device and sent to the second display controller 504 by the first display controller 501, and then is displayed on the second display unit 505 while the rest of the image signal is displayed on the first display unit 502.

In another example, when the user has selected a video signal playback (e.g., using a menu icon or a remote controller), the first display controller 501 determines that subtitle data that can be output separately from a video signal is the data to be output to the second display controller 504.

Here, one or more subtitle data may be selected by the user or the first display controller 501 (e.g., based on the preset settings or the original of the video signal associated with the subtitle data) and the selected subtitle data is transmitted from the first display controller 501 to the second display controller 504.

The display device includes or displays a user interface (e.g., menu screen) to receive a command for selecting one or more subtitle data.

On the user interface displayed, the user may select a plurality of subtitle data or select a plurality of languages and can simultaneously view a plurality of subtitle data corresponding to the selected languages on a screen of the second display unit.

Here, the plurality of selected subtitle data may correspond to different languages.

For example, the display device outputs a user interface (e.g., menu)_that enables the user to select a plurality of subtitle data, and outputs a user interface that enables the user to select one or more subtitle data among the plurality of subtitle data or to select a plurality of languages, and may receive one or more languages selected from the user through the user interface. For instance, a user may select to display two different subtitle data (e.g., English subtitle and Korean subtitle) and the selected two subtitles are simultaneously displayed on the second display unit 505 while the video or images corresponding to the currently displaying subtitles are also displayed on the first display unit 502. The second display unit 505 may have a screen that is logically divided into two parts for respectively displaying the selected two subtitles. In this manner, any number of different subtitle data or any number of different data (e.g., subtitle and EPG data) may be displayed simultaneously on the second display unit 505 while the first display unit 502 displays the appropriate images. The manner in which the second display unit 505 displays data can be controlled according to the user's input or settings.

In another example, when the user has activated a widget function, the first display controller 501 determines that the widget menu is the data to be output to the second display controller 504. Through the widget menu, if the user has selected a menu item for viewing stock information through the Internet, the first display controller 501 determines that the stock information is to be output separately from the image signal as the data to be output to the second display controller 504.

The second display controller 504 receives the data from the first display controller 501 through the connection unit 503 and controls the second display unit 505 to display the received data thereon. The first display controller 501 can control the second display controller 504, or each of the first and second display controllers 501 and 504 can be independently operated.

The second display unit 505 outputs data or images under control of the second display controller 504.

FIG. 6 is a flow chart illustrating a method for outputting a screen on a display device according to an embodiment of the present invention. The method of FIG. 6 and methods discussed herein including the methods of other figures are preferably implemented in the display device of FIGS. 3-5, but can be implemented in other display devices or other suitable apparatuses.

As shown in FIG. 6, at step S601, the first display controller 501 of the display device according to the embodiment of the present invention determines which data is to be output to the second display controller 504 according to a selection input from the user.

Here, the selection input from the user includes any command or menu item selection for displaying contents on the display device.

At step S602, the first display controller 501 transmits the determined data to the second display controller 504. Here, the first display controller 501 can transmit the data to the second display controller 504 through the connection unit 503, using a variety of wired/wireless data transmission schemes according to the embodiments.

At step S603, the second display controller 504 receives data and controls the second display unit 505 to output data thereon. The second display unit 505 outputs the data on its screen under control of the second display controller 504 at step S604.

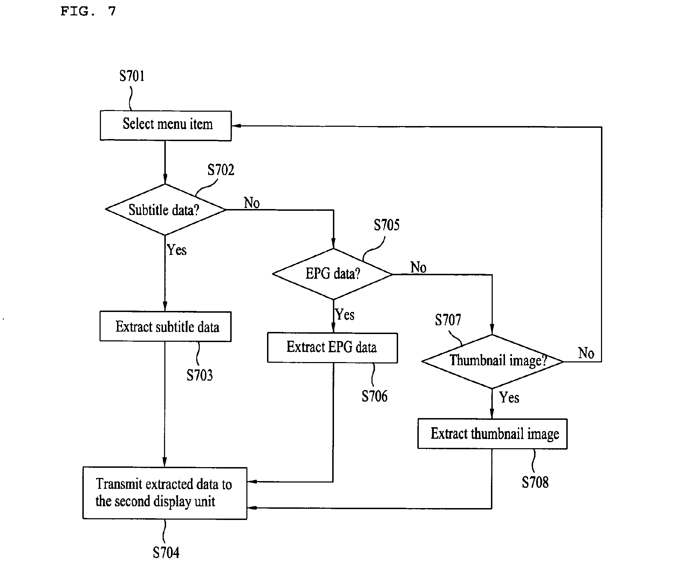

FIG. 7 illustrates an embodiment wherein the second display unit outputs data received within a broadcast signal according to the present invention.

At step S701, the display device outputs a menu item for allowing the user to confirm data to be output to the second display unit 505 and receives an input for selecting the menu item from the user via the input unit of the display device. At step S702, the first display controller 501 determines whether or not the data to be output is subtitle data according to the menu item that the user has selected.

If the data to be output is subtitle data, the display device extracts the subtitle data from a broadcast signal at step S703 and then transmits the extracted subtitle data to the second display controller 504 at step S704, and the second display controller 504 outputs the received subtitle data to the second display unit 505 which in turn displays the subtitle data thereon. The subtitle data is displayed on the second display unit 505 simultaneously while the contents (excluding and corresponding to the subtitle data) are displayed on the first display unit 502.

At step S705, the display device determines whether or not the data to be output is EPG data. If the data to be output is EPG data, the display device (e.g., first display controller 501) extracts the EPG data from the broadcast signal at step S706 and transmits the extracted EPG data to the second display controller at step S704 and the second display controller 504 outputs the received EPG data to the second display unit 505 which in turn displays the EPG data thereon at the same time the broadcast signal (excluding the EPG data) is displayed on the first display unit 502.

Similarly, if the data to be output is broadcast-related information, the display device extracts the broadcast-related information associated with a broadcast program, which is being output to the first display unit 502, from the broadcast signal received by the display device and outputs the extracted broadcast-related information to the second display controller 504. The second display controller 504 outputs the received broadcast-related information to a screen of the second display unit 505, e.g., while the broadcast program or other content is displayed on the first display unit 502.

At step S707, the display device determines whether or not the data to be output is a thumbnail image. If the data to be output is a thumbnail image, the display device (e.g., first display controller 501) extracts a thumbnail image from video data of the broadcast signal at step S708 and transmits the extracted thumbnail image to the second display controller 504, and the second display controller 504 outputs the received thumbnail image to the second display unit 505 so that the thumbnail images are displayed on the second display unit 505 while the video data is displayed on the first display unit 502.

Here, data such as the subtitle data, the EPG information, the broadcast-related information, and the thumbnail image may be previously extracted from a broadcast signal and then previously stored in a storage unit of the display device or an external or portable storage unit, or alternatively may be previously received from an external device and then be previously stored in a storage unit.

Determination as to which data is to be output may be made at steps S702, S705, and S707 according to the menu item selection made by the user at step S701, and the determination steps S702, S705, and S707 may be performed simultaneously according to an embodiment. Further, the determination in steps S702, S705 and S707 may be made directly by the second display controller 504, instead of the first display controller 501.

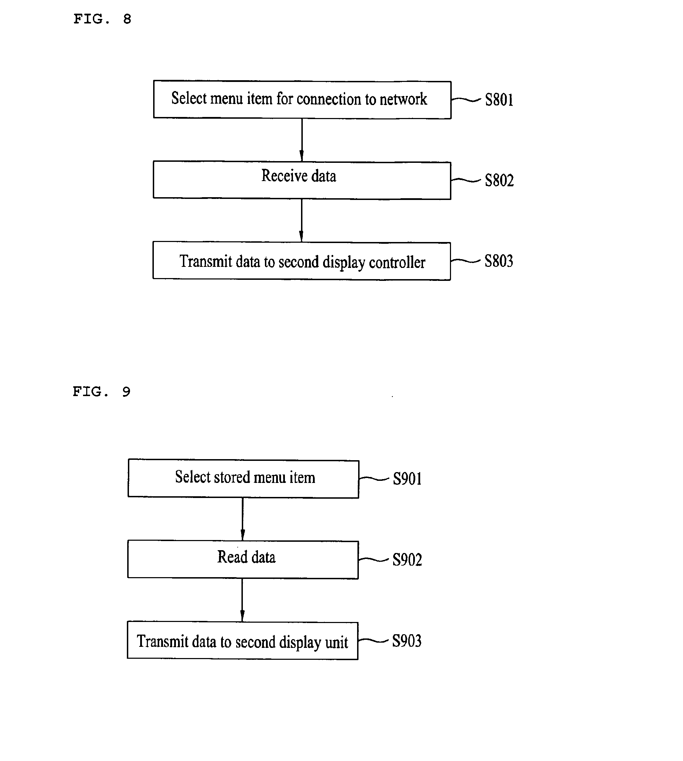

FIG. 8 illustrates a method in which content transmitted from a content server is output to the second display unit according to an embodiment of the present invention.

As shown in FIG. 8, at step S801, the display device (e.g., first or second display controller 501, 504) according to the embodiment of the present invention determines whether or not the user has input a selection of a menu item associated with network connection.

When it is determined at step S801 that the user has input a selection of the menu item associated with network connection (e.g., the user desires to connect to the network via the display device), the first display controller 501 receives data associated with the selected menu item at step S802 and then transmits the received data to the second display controller 504 at step S803 and the second display controller 504 outputs the received data to the second display unit 505 for displaying the data thereon.

Here, the data may include data of a menu item (for example, a widget menu item) or a variety of content data (for example, weather, sports, or stock information) that is transmitted from the content server according to the menu item selection made by the user.

For example, if the user activates the widget function at step S801, the first display controller 501 determines that the widget menu is the data to be output to the second display controller 504 and transmits the widget menu to the second display controller 504 which outputs the widget menu to the second display unit 505 for displaying the widget menu thereon.

In another example, if the user activates a function for viewing stock information through the Internet or other network via the input unit of the display device at step S801, the first display controller 501 determines that stock information data that can be output separately from the image signal is the data to be output to the second display controller 504 and transmits the stock information data to the second display controller 504. The second display controller 504 outputs the stock information data to the second display unit 505 for displaying thereon. The displaying on the first and second display units 502 and 505 can be controlled or modified according to the user input.

FIG. 9 illustrates a method for outputting stored data to the second display unit according to an embodiment of the present invention.

As shown in FIG. 9, at step S901, the display device (e.g., first or second display controller) according to an embodiment of the present invention determines whether or not the user has selected a menu item for outputting stored data.

If it is determined at step S901 that the user has input a selection of the menu item for outputting stored data, the first display controller 501 reads data to be output according to the menu item selected by the user at step S902 and transmits the read data to the second display controller 504 at step S903.The second display controller 504 outputs the received data on a screen of the second display unit.

Here, the data may be image data that is read from a storage unit according to an input (for example, an input for selecting a variety of functions) from the user. Here, as mentioned above, the storage unit can be an internal storage unit of the display device, a removable storage unit connected to the display device, or an external storage unit.

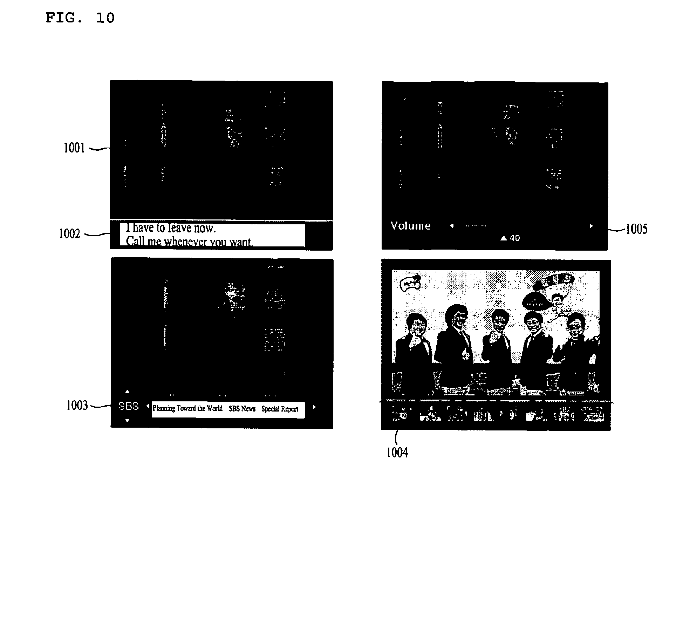

FIG. 10 illustrates examples of contents that can be displayed on the second display unit of the display device according to an embodiment of the present invention.

As shown in FIG. 10, the display device according to an embodiment of the present invention may output an image signal through a first display unit 1001 and may output data through a second display unit 1002, 1003, 1004, or 1005 of the display device. The first display unit 1001 corresponds to the first display unit discussed above, and each of the second display units 1002, 1003, 1004 and 1005 corresponds to the second display unit discussed above. Thus, the first display unit 1001 (and its screen) are physically separated from each of the second display units 1002, 1003, 1004 and 1005 (and its screen), e.g., by the frame of the display device.

As mentioned above, the data that can be displayed in the second display units 1002, 1003, 1004, 1005 may be subtitle data, EPG data, thumbnail images, and other data, and may be the stored data (e.g., volume data, channel data, etc.) that is output according to selection of a corresponding function by the user. The data also may be data that is transmitted from a content server or broadcast-related information associated with a broadcast program.

In Figure 10, as shown in the second display unit 1004, thumbnail images (e.g., using I frames) can be images respectively from different channels, e.g., different broadcast channels, and can be displayed simultaneously thereon. The thumbnail images can be moving images or still images. If a user selects one of the displayed thumbnail images, images or programs from a channel of the selected thumbnail image can then be displayed on the first display unit 1001. In this manner, the user can view the various thumbnail images displayed on the second display unit 1004 and then select one of the displayed thumbnail images to view the program of the thumbnail images on the first play unit 1001.

Although FIG. 10 illustrates examples wherein subtitle data, EPG data, thumbnail image, and stored data are displayed on the second display units 1002, 1003, 1004, and 1005, respectively, the present invention is not limited to these example.

For example, according to an embodiment of the present invention, a plurality of data may be simultaneously displayed on one second display unit of the display device. For instance, EPG data and/or stored data denoted by reference numerals 1003 and/or 1005 may be simultaneously displayed on the second display unit 1002 on which the subtitle data has been displayed. When a plurality of data are simultaneously displayed on the second display unit, it is preferable that the second display controller appropriately control the displaying of the plurality of data on the second display unit so that the plurality of data do not overlap on the screen. Here, the plurality of data simultaneously displayed on the second display unit can be different data (e.g., English subtitle and Korean subtitle; or subtitle data and EPG data). For instance, the data can be data different in type and/or format, e.g., OSD data, EPG data, subtitle data, thumbnail, caption, volume, etc.

As a variation, since a plurality of second display units can be provided in the display device and connected to one first display unit in the display device according to the present invention. A plurality of data can be displayed on the second display units such that at least one of the plurality of data is displayed on each of the second display units.

For example, in the case of a display device having two (left and right) second display units (e.g., FIGS. 11A and 11B), the subtitle data may be displayed on the left second display unit and the stored data may be displayed on the right second display unit according to a user input. In addition, a plurality of data may also be simultaneously displayed on at least one of the two second display units.

FIGS. 11A and 11B illustrate two examples of a display device according to an embodiment of the present invention, and FIG. 12 illustrates an example of various data/contents that can be displayed on multiple second output units of a display device according to the present invention.

As shown in each of FIGS. 11A and 11B, the display device can include a first display unit 1101 and two second display units 1102 and 1103. In the example of FIG. 11A, the two second display units 1102 and 1103 are in contact with each other, whereas in the example of FIG. 11B, the two second display units 1102 and 1103 are separated from each other by a frame 1105 of the display device. Although two second display units are shown, this is merely an example, and any number of second display units can be provided in the display device according to the present invention. For instance, if six second display units are provided in the display device, then each of the six second display units can contact at least another of the six second display units, or can be physically separated by the frame. The first display unit 1101 corresponds to the first display unit discussed in FIGS. 3-10, and the second display units 1102 and 1103 correspond to the second display unit discussed in Figures 3-10.

The plurality (two or more) of second display units display data/contents thereon simultaneously. Further, the second display units preferably display the data/contents while the first display unit displays contents thereon. Here the data displayed on each of the second display units can be the same data or different data, e.g., OSD data, EPG data, subtitle data, thumbnail, caption, volume, etc., and/or can be, e.g., broadcast data, data received from a network or server, or data stored in the display device or in an external device connected to the display device. For example, the two second display units 1102 and 1103 can display respectively and simultaneously English subtitle and Korean subtitle, or can display respectively and simultaneously sub title and EPG data. The data displayed on the second display units can be associated with the contents currently being displayed on the first display unit 1101 of the display device. The data displayed on a first one of the plurality of second display units can be different in type and/or format from the data displayed on a second one of the plurality of second display units.

Although FIGS. 11A and 11B show two second display units 1102 and 1103 in the display device, the invention encompasses any number of the second display units as discussed above. For example, as shown in FIG. 12, the display device may include one first display unit 1201 and four second display units 1202, 1203, 1204 and 1205. Each of the four second display units 1202-1205 contacts at least another of the four second display units 1202-1205 as shown. Each of the four second display units 1201-1205 can display simultaneously the same data or different data, e.g., subtitle (1202), EPG data (1203), thumbnail images (1204), and stored data such as volume data (1205). This preferably occurs while the first display unit 1201 displays contents which may or may not be related to the data being displayed on the second display units 1202-1205.

Further, although four second display units 1202-1205 are provided, not all of them need to be used at a given time. For instance, only two of the four second display units 1202-1205 may display data at one time. Furthermore, one or more of the second display units 1202-1205 may display data thereon without the first display unit 1201 displaying any contents thereon. That is, each of the first and second display units 1201-1205 may independently display data/contents thereon.

The present invention has an advantage in that the user can conveniently view an image signal on the first display unit since data other than the image signal is output to the second display unit.

The present invention also has an advantage in that the user can conveniently view an image signal on the first display unit since data included in a broadcast signal is extracted and output to the second display unit.

The present invention also has an advantage in that the user can conveniently view an image signal on the first display unit since data received from a content server through a network such as the Internet is output to the second display unit.

The present invention also overcomes the problem wherein the user cannot view an image signal due to other content (e.g., subtitle data) overlaid on the image signal since data is extracted and separately output on the second display unit according to a selection input from the user.

Furthermore, the present invention has an advantage in that the size of a screen that is used for regular viewing of broadcast programs and contents is not reduced and can be maintained since other contents such as subtitle data, EPG data, stored data, etc. can be displayed on a separate display unit of the display device.

Although the present invention has been described with reference to the specific embodiments and the drawings, the present invention is not limited to the embodiments and those skilled in the art will be able to make various modifications, additions, and substitutions from the description, without departing from the scope and spirit of the invention as disclosed in the accompanying claims. Accordingly, the scope of the present invention should be defined by the accompanying claims and equivalents or equivalent modifications thereof should be construed as being included in the scope of the invention.

## Claims

1. A method for displaying data using a display device, the display device including a first display unit, a first display controller configured to control the first display unit, at least one second display unit, and a second display controller configured to control the at least one second display unit, the method comprising:
receiving, by the first display controller, at least one content to be displayed;
checking, by the first display controller, if any data included in the at least one content is to be displayed separately;
transmitting, by the first display controller, the data to the second display controller if the checking step indicates that the data is to be displayed separately;
displaying, on the second display unit, the data under control of the second display controller; and
displaying, on the first display unit, the at least one content excluding the data under control of the first display controller.

2. The method according to claim 1, wherein the data displayed on the second display unit includes a plurality of different thumbnail images respectively from a plurality of different channels.

3. The method according to claim 2, further comprising:
receiving, by the second display controller, an input selecting one of the thumbnail images displayed on the second display unit;
transmitting the selected thumbnail image from the second display controller to the first display controller; and
displaying, on the first display unit, contents from one of the channels corresponding to the selected thumbnail image.

4. The method according to claim 1, wherein the data is one of the following:
broadcast data,
data received from a network or server, or
data stored in the display device or in an external device connected to the display device.

5. The method according to claim 1, wherein the data includes at least one of subtitle data, Electronic Program Guide (EPG) data, broadcast-related information, a thumbnail image, and caption data.

6. The method according to claim 1, wherein the checking step check if any data included in the at least one content is to be displayed separately according to an external input.

7. The method according to claim 1, wherein the second display unit is disposed at a side region of the display device, and the first display controller and the second display controller are connected to a network.

8. The method according to claim 1, wherein the displaying steps are performed simultaneously such that the data and the at least one content excluding the data are simultaneously displayed on the display device.

9. The method according to claim 1, wherein the at least one second display unit includes a plurality of second display units, and
Wherein the step of displaying, on the second display unit, the data displays the data on the plurality of second display units.

10. The method according to claim 9, wherein the data displayed on each of the plurality of second display units includes:
broadcast data,
data received from a network or server, or
data stored in the display device or in an external device connected to the display device.

11. The method according to claim 9, wherein the data displayed on a first one of the plurality of second display units is different in type and/or format from the data displayed on a second one of the plurality of second display units.

12. The method according to claim 1, wherein the first display unit and the at least one second display unit are physically separated display units.

## Amended claims

### Amended claims in accordance with Rule 137(2) EPC.

1. A method for displaying data using a display device (300), the display device including a first display unit (301, 401, 502), a first display controller (402, 501) configured to control the first display unit, at least one second display unit (403, 302, 505), and a second display controller (404, 504) configured to control the at least one second display unit, the method comprising:
receiving, by the first display controller, at least one content to be displayed;
checking, by the first display controller, if any data included in the at least on content is to be displayed separately;
transmitting (S602), by the first display controller, the data to the second display controller if the checking step indicates that the data is to be displayed separately; and
displaying, on the first display unit, the at least one content excluding the data under control of the first display controller,
**characterized by**:
receiving (S603), by the second display controller, a signal for one of selecting a plurality of subtitle data and selecting a plurality of languages to be displayed on the second display unit; and
displaying (S604), on the second display unit, the plurality of selected subtitle data under control of the second display controller

2. The method according to claim 1, wherein the data displayed on the second display unit includes a plurality of different thumbnail images respectively from a plurality of different channels.

3. The method according to claim 2, further comprising:
receiving, by the second display controller, an input selecting one of the thumbnail images displayed on the second display unit;
transmitting the selected thumbnail image from the second display controller to the first display controller; and
displaying, on the first display unit, contents from one of the channels corresponding to the selected thumbnail image.

4. The method according to claim 1, wherein the data is one of the following:
broadcast data,
data received from a network or server, or
data stored in the display device or in an external device connected to the display device.

5. The method according to claim 1, wherein the data further includes at least one of Electronic Program Guide, EPG, data, broadcast-related information, a thumbnail image, and caption data.

6. The method according to claim 1, wherein the checking step checks if any data included in the at least one content is to be displayed separately according to an external input.

7. The method according to claim 1, wherein the second display unit is disposed at a side region of the display device, and the first display controller and the second display controller are connected to a network.

8. The method according to claim 1, wherein the displaying steps are performed simultaneously such that the data and the at least one content excluding the data are simultaneously displayed on the display device.

9. The method according to claim 1, wherein the at least one second display unit includes a plurality of second display units, and
Wherein the step of displaying, on the second display unit, the data displays the data on the plurality of second display units.

10. The method according to claim 9, wherein the data displayed on each of the plurality of second display units includes:
broadcast data,
data received from a network or server, or
data stored in the display device or in an external device connected to the display device.

11. The method according to claim 9, wherein the data displayed on a first one of the plurality of second display units is different in type and/or format from the data displayed on a second one of the plurality of second display units.

12. The method according to claim 1, wherein the first display unit and the at least one second display unit are physically separated display units.

13. The method according to claim 1, further comprising;
displaying, on the second display unit, a widget menu if any widget is to be activated.
